# EUROPÄISCHE PATENTANMELDUNG

(11) **EP 4 428 015 A1**
(43) Veröffentlichungstag der Anmeldung: **11.09.2024**
(21) Anmeldenummer: 24157326.0
(22) Anmeldetag: 13.02.2024
(51) Int. Cl.: B62D 27/06, B62D 29/04

(54) **VERFAHREN ZUR BESCHÄDIGUNGSFREIEN MONTAGE UND/ODER DEMONTAGE ZWEIER DURCH VERRASTUNG MITEINANDER VERBINDBARER KRAFTFAHRZEUG-BAUTEILE**

(30) Priorität: 06.03.2023 DE 102023105400
(71) Anmelder: REHAU Automotive SE & Co. KG, 95111 Rehau (DE)
(72) Erfinder: Pfretzschner, Tobias, 95111 Rehau (DE); Schneider, Sebastian, 08523 Plauen (DE); Speck, Kevin, 95111 Rehau (DE)

(57) **Zusammenfassung**

Die Erfindung betrifft ein Verfahren zur beschädigungsfreien Montage und/oder Demontage zweier durch Verrastung miteinander verbindbarer Kraftfahrzeug-Bauteile (1, 2), insbesondere aus spritzgegossenem Kunststoff, wobei das eine, erste Kraftfahrzeug-Bauteil (1) ein Rastelement (4) mit einem Verformungsabschnitt (5) aufweist, wobei der Verformungsabschnitt (5) derart elastisch ausgebildet ist, dass er bei der verrastenden Montage der beiden Kraftfahrzeug-Bauteile (1, 2) beschädigungsfrei so weit zusammendrückbar ist, dass hierdurch eine Verrastung des Rastelementes (4) mit einem Gegenrastelement (6) des anderen, zweiten Kraftfahrzeug-Bauteils (2) ermöglicht wird, und wobei bei der Demontage der beiden Kraftfahrzeug-Bauteile (1, 2) der Verformungsabschnitt (5) mindestens so weit zusammendrückbar ist, dass eine Entrastung der Kraftfahrzeug-Bauteile (1, 2) und damit eine Trennung die beiden Kraftfahrzeug-Bauteile (1, 2) voneinander möglich ist. Erfindungsgemäß ist mindestens eine, vorzugsweise am ersten Kraftfahrzeug-Bauteil (1) angeordnete, Begrenzungsvorrichtung (7) vorgesehen ist, die ein übermäßiges Zusammendrücken des Verformungsabschnitts (5) und damit eine Beschädigung dieses Abschnitts (5) bei der Montage und/oder Demontage der beiden Kraftfahrzeug-Bauteile (1, 2) verhindert.

## Beschreibung

Die Erfindung betrifft ein Verfahren zur beschädigungsfreien Montage und/oder Demontage zweier durch Verrastung miteinander verbindbarer Kraftfahrzeug-Bauteile, insbesondere aus spritzgegossenem Kunststoff,
- wobei das eine, erste Kraftfahrzeug-Bauteil ein Rastelement mit einem Verformungsabschnitt aufweist,
- wobei der Verformungsabschnitt derart elastisch ausgebildet ist, dass er bei der verrastenden Montage der beiden Kraftfahrzeug-Bauteile beschädigungsfrei so weit zusammendrückbar ist, dass hierdurch eine Verrastung des Rasteelementes mit einem Gegenrastelement des anderen, zweiten Kraftfahrzeug-Bauteils ermöglicht wird, und
- wobei bei der Demontage der beiden Kraftfahrzeug-Bauteile der Verformungsabschnitt mindestens so weit zusammendrückbar ist, dass eine Entrastung der Kraftfahrzeug-Bauteile und damit eine Trennung die beiden Kraftfahrzeug-Bauteile voneinander möglich ist.

Rastverbindungen von Kunststoffbauteilen sind hinlänglich bekannt, insbesondere auch im Bereich von Kraftfahrzeug-Bauteilen. Als Beispiele seien genannt:
Bei der Demontage, aber auch bei der routinemäßigen Montage zweier Kraftfahrzeug-Bauteile aus spritzgegossenem Kunststoff der eingangs genannten Art besteht die latente Gefahr, dass bei dem hierzu erforderlichen Zusammendrücken des Verformungsabschnittes dieser - z.B. manuell - stärker gestaucht wird, als dies für den Montage- bzw. Demontagevorgang eigentlich erforderlich ist. Es kann dann zu einer mechanischen Überbeanspruchung und damit einhergehend zu einer Beschädigung des Verformungsabschnittes, bis hin zum Bruch, kommen. Aus diesem Grund sind in der Praxis die einen entsprechenden Montage- bzw. Demontagevorgang durchführenden Personen in der Regel angehalten, besondere Vorsicht walten zu lassen. Diese Vorsicht lässt sich jedoch nicht immer zuverlässig gewährleisten und verlangsamt auch den entsprechenden Vorgang.

Vor diesem Hintergrund liegt der Erfindung die Aufgabe zugrunde, ein Verfahren mit den eingangs beschriebenen Merkmalen anzugeben, dass mit hoher Zuverlässigkeit beschädigungsfrei und schnell durchführbar ist.

Erfindungsgemäß wird diese Aufgabe dadurch gelöst, dass mindestens eine, vorzugsweise am ersten Kraftfahrzeug-Bauteil angeordnete, Begrenzungsvorrichtung vorgesehen ist, die ein übermäßiges Zusammendrücken des Verformungsabschnitts und damit eine Beschädigung dieses Abschnitts bei der Montage und/oder Demontage der beiden Kraftfahrzeug-Bauteile verhindert. Durch die erfindungsgemäße Begrenzungsvorrichtung wird zuverlässig verhindert, dass der Verformungsabschnitt während eines Demontage- bzw. eines Montagevorganges ungewollt deutlich stärker mechanisch beansprucht wird, als dies für den entsprechenden Vorgang eigentlich erforderlich ist. Zweckmäßigerweise begrenzt die Begrenzungsvorrichtung den Verformungsweg des Verformungsabschnittes bei der Demontage bzw. Montage. Hierdurch vereinfacht sich insbesondere für eine einen solchen Vorgang durchführende Person die entsprechende Handhabung, so dass sie diesen Vorgang auch schneller bewerkstelligen kann. Die Begrenzungsvorrichtung kann mehrteilig ausgebildet sein und ist vorzugsweise an das erste Kraftfahrzeug-Bauteil im Wege des Spritzgussverfahrens einstückig angeformt. Vorzugsweise wird die Begrenzungsvorrichtung konstruktiv derart seitlich angeformt, dass kein zusätzlicher Schieber im entsprechenden Spritzgusswerkzeug erforderlich ist.

Zweckmäßigerweise ist der Verformungsabschnitt bogenförmig, insbesondere V-förmig, ausgebildet. Durch die Bogen-, insbesondere V-Form ist ein vergleichsweiser langer Federweg des Verformungsabschnitt gegeben, welcher den Montage- bzw. Demontagevorgang erleichtert. Im Rahmen der Erfindung liegt es, dass der Verformungsabschnitt mit mindestens einer Verstärkungsrippe versehen ist. Hierdurch wird dessen mechanische Belastbarkeit erhöht.

Vorzugsweise weist der Verformungsabschnitt ein freies Ende auf, in dessen Bereich vorzugsweise die Verrastung mit dem zweiten Kraftfahrzeug-Bauteil erfolgt. Ein Bestandteil der Begrenzungsvorrichtung kann hierbei an das freie Ende des Verformungsabschnittes, vorzugsweise einstückig, angeformt sein. Zweckmäßigerweise ist ein zweiter Bestandteil der Begrenzungsvorrichtung neben dem dem freien Ende gegenüberliegenden Bereich des Verformungsabschnitts derart angeordnet, vorzugsweise an das erste Kraftfahrzeug-Bauteil, insbesondere ebenfalls an den Verformungsabschnitt angeformt, dass die beiden Bestandteile bei der Montage bzw. Demontage der beiden Kraftfahrzeug-Bauteile vor dem Erreichen einer übermäßigen, eine Beschädigung hervorrufenden Biegebeanspruchung des Verformungsabschnitts gegenseitig zum Anschlag kommen. Nach Erreichen des Anschlags ist keine weitere Verformung des Verformungsabschnittes mehr möglich und somit wird eine unbeabsichtigte Beschädigung desselben während einer Demontage bzw. Montage erfindungsgemäß zuverlässig verhindert. Hierbei können die beiden Bestandteile unter Bildung einer gemeinsamen Anschlagfläche flächig aneinander anschlagen. Zweckmäßigerweise ist die Anschlagfläche schräg zur Montage- bzw. Demontagebewegung des Verformungsabschnittes ausgerichtet.

Gegenstand der Erfindung ist auch eine Kraftfahrzeug-Bauteilgruppe zur Durchführung des vorstehend beschriebenen Verfahrens sowie eine Kraftfahrzeug-Bauteilgruppe, mit der insbesondere das vorbeschriebene Verfahren durchgeführt werden kann. Bei der Kraftfahrzeug-Bauteilgruppe kann es sich beispielsweise um ein, vorzugsweise lackiertes, Stoßfänger-Bauteil handeln, an welches ein Halterungs-Bauteil für eine elektronische Komponente, z.B. ein MRR (Mid-Range Radar), angeklipst wird. Grundsätzlich kann die erfindungsgemäße Lehre aber für beliebig gestaltete, miteinander zu verrastende Kraftfahrzeug-Bauteile zum Einsatz kommen.

Im Folgenden wird die Erfindung anhand einer lediglich ein Ausführungsbeispiel darstellenden Zeichnung ausführlich erläutert. Es zeigen schematisch:
- Fig. 1a: eine ausschnittsweise dargestellte Kraftfahrzeug-Bauteilgruppe bestehend aus zwei Kraftfahrzeug-Bauteilen gemäß dem Stand der Technik im verrasteten Zustand,
- Fig. 1b: eines der beiden in Fig. 1a gezeigten Kraftfahrzeug-Bauteile in einer ausschnittsweisen Einzeldarstellung,
- Fig. 2a: ein erfindungsgemäßes Kraftfahrzeug-Bauteil in einer ausschnittsweisen Einzelansicht,
- Fig. 2b: die Ansicht A in Fig. 2a,
- Fig. 3a: eine ausschnittsweise Detailansicht einer erfindungsgemäßen Kraftfahrzeug-Bauteilgruppe zur Durchführung des erfindungsgemäßen Verfahrens und
- Fig. 3b: die Ansicht B in Fig. 3a.

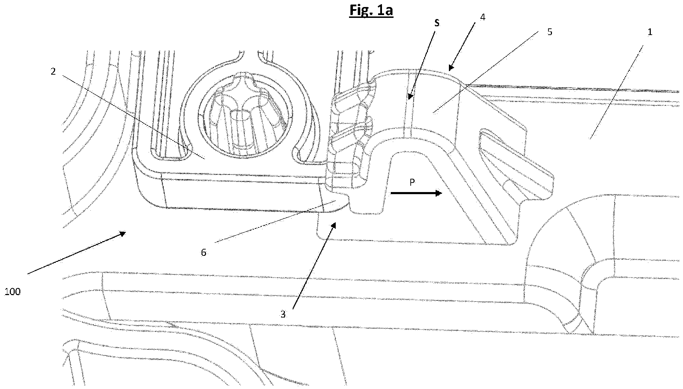

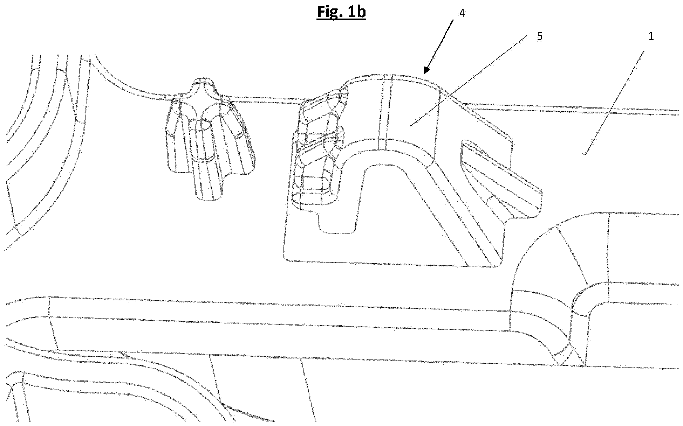

In Fig. 1a ist ausschnittsweise eine Kraftfahrzeug-Bauteilgruppe 100 gemäß dem Stand der Technik dargestellt, wobei diese aus zwei in Fig. 1a miteinander verrasteten Kraftfahrzeug-Bauteilen 1, 2 besteht. Die Kraftfahrzeug-Bauteile 1, 2 sind aus spritzgegossenem Kunststoff, beispielsweise Polypropylen, gefertigt. Die beiden Bauteile 1, 2 sind durch mehrere Rastverbindungen 3 miteinander verbunden, wobei in Fig. 1a davon jedoch nur eine dargestellt ist. Es ist erkennbar, dass das eine, erste Kraftfahrzeug-Bauteil 1, z.B. ein lackierter Stoßfänger, ein Rastelement 4 mit einem Verformungsabschnitt 5 aufweist. Hierbei ist der Verformungsabschnitt 5 derart elastisch ausgebildet, dass er bei der verrastenden Montage (s. Pfeil P, der die Montagebewegung des Verformungsabschnittes 5 andeutet) der Kraftfahrzeug-Bauteile 1, 2 beschädigungsfrei so weit zusammendrückbar ist, dass hierdurch eine Verrastung des Rastelementes 4 mit einem Gegenrastelement 6 des anderen, zweiten Kraftfahrzeug-Bauteils 2 (z.B. ein Halterungs-Bauteil für eine elektronische Komponente, bspw. ein MRR) ermöglicht wird. Ferner ist auch bei einer Demontage der beiden Kraftfahrzeug-Bauteile 1, 2 der Verformungsabschnitt 5 mindestens so weit zusammendrückbar, dass eine Entrastung der Kraftfahrzeug-Bauteile 1, 2 erfolgt und die beiden Kraftfahrzeug-Bauteile 1, 2 sodann voneinander getrennt werden können. Insbesondere bei einer Demontage (s. wiederum Pfeil P, der auch die Demontagebewegung des Verformungsabschnittes 5 andeutet) kann der Verformungsabschnitt 5 unbeabsichtigt so weit zusammengedrückt werden, dass eine mechanische Überlastung dieses Abschnittes 5, vor allem in dessen Scheitelpunktsbereich S, erfolgt, die mit einer Schädigung, bzw. sogar mit einem Bruch dieses Abschnittes 5 einhergehen kann. Eine solche ungewollte Überbeanspruchung ist grundsätzlich aber auch bei der verrastenden Montage der beiden Kraftfahrzeug-Bauteile 1, 2 möglich. Zur besseren Veranschaulichung ist in Fig. 1b das erste Kraftfahrzeug-Bauteil 1 gemäß Fig. 1a in einer ausschnittsweisen Einzeldarstellung gezeigt.

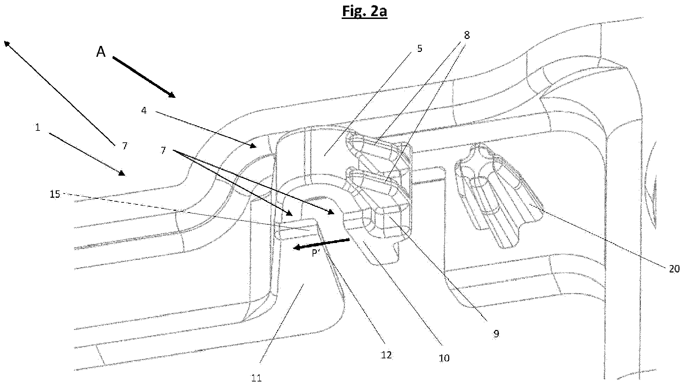

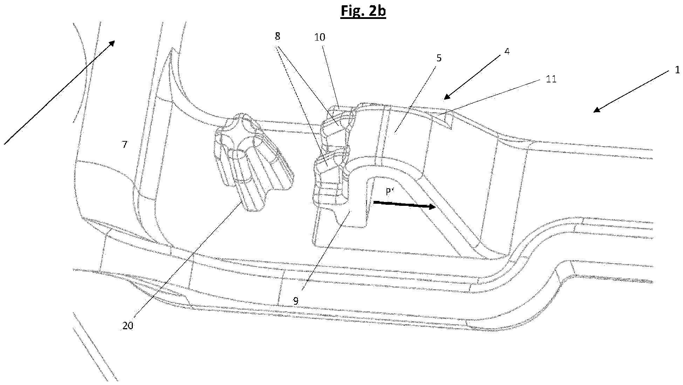

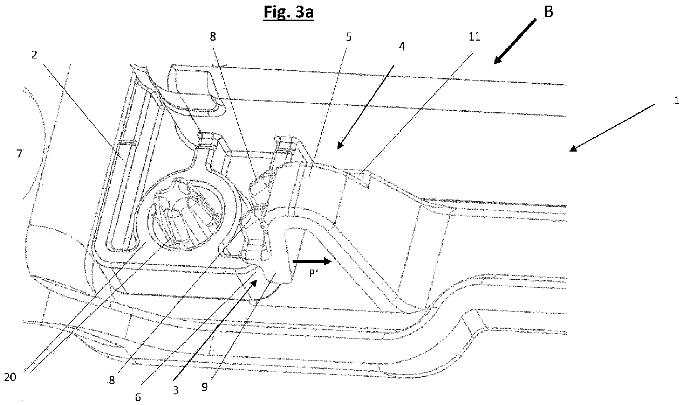

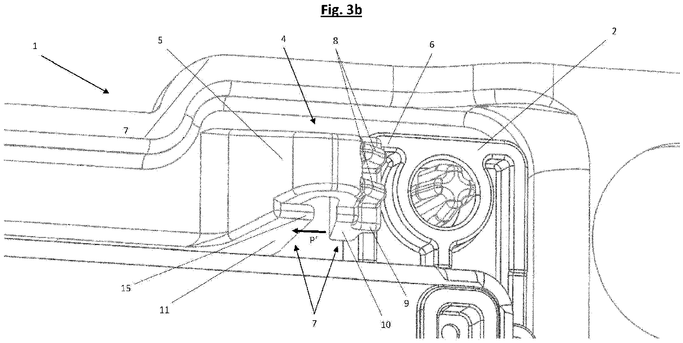

Fig. 2a,b zeigen eine ausschnittsweise Einzelansicht eines erfindungsgemäßen ersten Kraftfahrzeug-Bauteils 1, welche grundsätzlich ebenfalls die zuvor geschilderten konstruktiven Merkmale des Kraftfahrzeug-Bauteils 1 gemäß Fig. 1a,b aufweist (die Perspektive der Fig. 2b entspricht im Wesentlichen jener in Fig. 1b). Zusätzlich ist jedoch am erfindungsgemäßen ersten Kraftfahrzeug-Bauteil 1 eine Begrenzungsvorrichtung 7 angeordnet. Diese Begrenzungsvorrichtung 7 verhindert ein übermäßiges Zusammendrücken des Verformungsabschnitts 5 und damit eine Beschädigung dieses Abschnitts 5 bei einer Montage und/oder Demontage der beiden, in Fig. 3a,b ausschnittsweise dargestellten Kraftfahrzeug-Bauteile 1, 2. Bei einem erfindungsgemäßen Verfahren zur beschädigungsfreien Montage und/oder Demontage der beiden Kraftfahrzeug-Bauteile 1, 2 begrenzt somit die erfindungsgemäße Begrenzungsvorrichtung 7 den Verformungsweg des Verformungsabschnittes 5 derart, dass zwar einerseits die gewünschte Verrastung bzw. Entrastung vorgenommen werden kann, andererseits aber eine mechanische Überbeanspruchung des Verfomungsabschnittes 5 und damit eine damit einhergehende Beschädigung desselben sicher verhindert wird. Das erste Kraftfahrzeug-Bauteil 1 weist zur exakten Positionierung gegenüber dem (in Fig. 2a,b nicht dargestellten) zweiten Kraftfahrzeug-Bauteil 2 mindestens ein Zentrierelement 20 auf.

Fig. 3a,b zeigen eine erfindungsgemäße Kraftfahrzeug-Bauteilgruppe 100 mit den beiden Kraftfahrzeug-Bauteilen 1, 2 ausschnittsweise in einem montierten, d.h. miteinander verrasteten Zustand. Man sieht, dass hierbei Zentrierelemente 20 der beiden Bauteile 1, 2 zusammenwirken, wobei im Ausführungsbeispiel das gezeigte Zentrierelement 20 des ersten Bauteils 1 als Zentrierzapfen und das korrespondierende Zentrierelement 20 des zweiten Bauteils 2 als Zentrieröffnung ausgebildet ist. Es ist in allen Figuren erkennbar, dass der Verformungsabschnitt 5 bogenförmig, konkret V-förmig, ausgebildet ist. Ferner ist der Verformungsabschnitt 5 mit Verstärkungsrippen 8 versehen. Der Verformungsabschnitt 5 weist ein freies Ende 9 auf, in dessen Bereich die Verrastung mit dem zweiten Kraftfahrzeug-Bauteil 2 erfolgt.

Ein erster Bestandteil 10 der Begrenzungsvorrichtung 7 ist an das freie Ende 9 des Verformungsabschnittes 5 einstückig seitlich angeformt. Ein zweiter Bestandteil 11 der Begrenzungsvorrichtung 7 ist neben dem dem freien Ende 9 gegenüberliegenden Bereich des Verformungsabschnitts 5 derart an den Verformungsabschnitt 5 einstückig seitlich angeformt, dass die beiden, als gegenseitige Anschlagelemente ausgebildete Bestandteile 10, 11 bei der Montage bzw. Demontage der beiden Kraftfahrzeug-Bauteile 1, 2 vor dem Erreichen einer übermäßigen, eine Beschädigung hervorrufenden Biegebeanspruchung des Verformungsabschnitts 5 gegenseitig zum Anschlag kommen. Konkret weist im Ausführungsbeispiel der zweite Bestandteil 11 gegenüber dem Verformungsabschnitt 5 zum ersten Bestandteil 10 hin gesehen einen Überstand 15 auf, welcher den Verformungsweg des Verformungsabschnittes 5 durch einen entsprechend frühzeitigen Anschlag an den ersten Bestandteil 10 begrenzt. Die beiden Bestandteile 10, 11 schlagen hierbei unter Bildung einer gemeinsamen Anschlagfläche 12 flächig aneinander an. Die Anschlagfläche 12 ist schräg zur Montage- bzw. Demontagebewegung des Verformungsabschnittes 5 (angedeutet durch den Pfeil P') des Verformungsabschnittes 5 ausgerichtet.

## Patentansprüche

1. Verfahren zur beschädigungsfreien Montage und/oder Demontage zweier durch Verrastung miteinander verbindbarer Kraftfahrzeug-Bauteile (1, 2), insbesondere aus spritzgegossenem Kunststoff,
- wobei das eine, erste Kraftfahrzeug-Bauteil (1) ein Rastelement (4) mit einem Verformungsabschnitt (5) aufweist,
- wobei der Verformungsabschnitt (5) derart elastisch ausgebildet ist, dass er bei der verrastenden Montage der beiden Kraftfahrzeug-Bauteile (1, 2) beschädigungsfrei so weit zusammendrückbar ist, dass hierdurch eine Verrastung des Rastelementes (4) mit einem Gegenrastelement (6) des anderen, zweiten Kraftfahrzeug-Bauteils (2) ermöglicht wird, und
- wobei bei der Demontage der beiden Kraftfahrzeug-Bauteile (1, 2) der Verformungsabschnitt (5) mindestens so weit zusammendrückbar ist, dass eine Entrastung der Kraftfahrzeug-Bauteile (1, 2) und damit eine Trennung die beiden Kraftfahrzeug-Bauteile (1, 2) voneinander möglich ist,
**dadurch gekennzeichnet, dass** mindestens eine, vorzugsweise am ersten Kraftfahrzeug-Bauteil (1) angeordnete, Begrenzungsvorrichtung (7) vorgesehen ist, die ein übermäßiges Zusammendrücken des Verformungsabschnitts (5) und damit eine Beschädigung dieses Abschnitts (5) bei der Montage und/oder Demontage der beiden Kraftfahrzeug-Bauteile (1, 2) verhindert.

2. Verfahren nach Anspruch 1, **dadurch gekennzeichnet, dass** der Verformungsabschnitt (5) bogenförmig, insbesondere V-förmig, ausgebildet ist.

3. Verfahren nach Anspruch 1 oder 2, **dadurch gekennzeichnet, dass** der Verformungsabschnitt (5) mit mindestens einer Verstärkungsrippe (8) versehen ist.

4. Verfahren nach einem der Ansprüche 1 bis 3, **dadurch gekennzeichnet, dass** der Verformungsabschnitt (5) ein freies Ende (9) aufweist, in dessen Bereich vorzugsweise die Verrastung mit dem zweiten Kraftfahrzeug-Bauteil (2) erfolgt.

5. Verfahren nach Anspruch 4, **dadurch gekennzeichnet, dass** ein Bestandteil (10) der Begrenzungsvorrichtung (7) an das freie Ende (9) des Verformungsabschnittes (5), vorzugsweise einstückig, angeformt ist.

6. Verfahren nach Anspruch 5, **dadurch gekennzeichnet, dass** ein zweiter Bestandteil (11) der Begrenzungsvorrichtung (7) neben dem dem freien Ende (9) gegenüberliegenden Bereich des Verformungsabschnitts (5) derart angeordnet, vorzugsweise an das erste Kraftfahrzeug-Bauteil (1) angeformt, ist, dass die beiden Bestandteile (10, 11) bei der Montage bzw. Demontage der beiden Kraftfahrzeug-Bauteile (1 ,2) vor dem Erreichen einer übermäßigen, eine Beschädigung hervorrufenden Biegebeanspruchung des Verformungsabschnitts (7) gegenseitig zum Anschlag kommen.

7. Verfahren nach Anspruch 6, **dadurch gekennzeichnet, dass** die beiden Bestandteile (10, 11) unter Bildung einer gemeinsamen Anschlagfläche (12) flächig aneinander anschlagen.

8. Verfahren nach Anspruch 7, **dadurch gekennzeichnet, dass** die Anschlagfläche (12) schräg zur Montage- bzw. Demontagebewegung des Verformungsabschnittes (5) ausgerichtet ist.

9. Kraftfahrzeug-Bauteilgruppe (100) zur Durchführung des Verfahrens nach einem der Ansprüche 1 bis 8.

10. Kraftfahrzeug-Bauteilgruppe (100), insbesondere nach Anspruch 9, mit
- mindestens zwei Kraftfahrzeug-Bauteilen (1, 2), insbesondere aus spritzgegossenem Kunststoff, die durch mindestens eine Rastverbindung (3) miteinander verbunden sind,
- wobei das eine, erste Kraftfahrzeug-Bauteil (1) ein Rastelement (4) mit einem Verformungsabschnitt (5) aufweist,
- wobei der Verformungsabschnitt (5) derart elastisch ausgebildet ist, dass er bei der verrastenden Montage der Kraftfahrzeug-Bauteile (1, 2) beschädigungsfrei so weit zusammendrückbar ist, dass hierdurch eine Verrastung des Rastelementes (4) mit einem Gegenrastelement (6) des anderen, zweiten Kraftfahrzeug-Bauteils (2) ermöglicht wird, und
- wobei bei der Demontage der beiden Kraftfahrzeug-Bauteile (1, 2) der Verformungsabschnitt (5) mindestens so weit zusammendrückbar ist, dass eine Entrastung der Kraftfahrzeug-Bauteile (1, 2) erfolgt und die beiden Kraftfahrzeug-Bauteile (1, 2) sodann voneinander getrennt werden können,
**dadurch gekennzeichnet, dass** mindestens eine, vorzugsweise am ersten Kraftfahrzeug-Bauteil (1) angeordnete, Begrenzungsvorrichtung (7) vorgesehen ist, die ein übermäßiges Zusammendrücken des Verformungsabschnitts (5) und damit eine Beschädigung dieses Abschnitts (5) bei einer Montage und/oder Demontage der beiden Kraftfahrzeug-Bauteile (1, 2) verhindert.
